# EUROPEAN PATENT SPECIFICATION

(11) **EP 3 951 345 B1**
(45) Date of publication and mention of the grant of the patent: **01.01.2025**
(21) Application number: 19920901.6
(22) Date of filing: 29.11.2019
(51) Int. Cl.: G01M 11/02, H04B 10/071, H04B 10/077, H04J 14/02, G01M 11/00

(54) **LIGHT-TRANSMISSION-PATH-SPECTRUM MEASUREMENT DEVICE, LIGHT-TRANSMISSION-PATH-SPECTRUM MEASUREMENT METHOD, AND LIGHT-TRANSMISSION-PATH-SPECTRUM MEASUREMENT PROGRAM**
VORRICHTUNG ZUR MESSUNG DES LICHTTRANSMISSIONSPFADSPEKTRUMS, VERFAHREN ZUR MESSUNG DES LICHTTRANSMISSIONSPFADSPEKTRUMS UND COMPUTERPROGRAMM ZUR MESSUNG DES LICHTTRANSMISSIONSPFADSPEKTRUMS
DISPOSITIF DE MESURE DE SPECTRE DE TRAJET DE TRANSMISSION DE LUMIÈRE, PROCÉDÉ DE MESURE DE SPECTRE DE TRAJET DE TRANSMISSION DE LUMIÈRE ET PROGRAMME INFORMATIQUE DE MESURE DE SPECTRE DE TRAJET DE TRANSMISSION DE LUMIÈRE

(30) Priority: 27.03.2019 JP 2019060548
(43) Date of publication of application: 09.02.2022
(73) Proprietor: NEC Corporation, 108-8001 Tokyo (JP)
(72) Inventor: NAKANO, Takehiro, Tokyo 108-8001 (JP)
(74) Representative: Vossius & Partner Patentanwälte Rechtsanwälte mbB
(86) International application number: PCT/JP2019/046899
(87) International publication number: WO 2020/194879

(56) References cited:
- JP-A- 2002 094 457
- JP-A- 2004 023 300
- JP-A- 2009 047 508
- JP-A- 2016 144 013
- US-A1- 2002 012 142
- US-A1- 2002 044 314
- US-A1- 2003 231 888
- US-A1- 2005 196 174
- US-A1- 2014 078 506

## Description

### Technical Field

The present invention relates to a light-transmission-path-spectrum measurement device, a light-transmission-path-spectrum measurement method, and a light-transmission-path-spectrum measurement program.

### Background Art

A submarine optical cable system is becoming more open, and greater importance is placed for a system owner to recognize performance of a transmission path in order to maximize an expansion capacity of the system.
US 2002/044314 A1 relates to a formula of optical transmission path monitoring for monitoring the states of optical fibers and optical amplifier-repeaters constituting optical transmission paths in a wavelength division multiplexing optical transmission system by utilizing an optical time domain reflectometer.
US 2014/078506 A1 relates to an optical time domain reflectometry signal detection method and apparatus.
US 2002/012142 A1 relates to a system and method for wavelength dependent measurement in optical signal transmission systems. This patent teaches obtaining the gain response of an optical transmission link (or a part of the link, e.g. a block of repeaters) by measuring the gain flatness, i.e. the amplifier gain at different wavelengths. A Coherent Optical Time Domain Reflectometry (COTDR) technique is employed for this purpose.
US 2003/231888 A1 relates to a method and system for measuring a gain profile in the middle of an optical transmission line and a gain profile controlling method and system for controlling a gain profile in an optical transmission line by utilizing the gain profile measuring method and system.
US 2005/196174 A1 relates to the use of an arrangement to allow coherent optical time domain reflectometry (COTDR) to be used to detect faults in the optical transmission path of an optical transmission system consisting of multiple spans of fiber and optical amplifiers.

### Citation List

### Patent Literature

[Patent Literature 1] Japanese Unexamined Patent Application Publication No. 2018-006907

### Summary of Invention

The invention is specified by the independent claims. Preferred embodiments are defined in the dependent claims.

### Technical Problem

In a submarine optical cable system, a light transmission path, a repeater constituting the light transmission path, a cable, and the like are laid on a sea bottom, and thus spectrum acquisition in the light transmission path is difficult. A spectrum inclination and a deviation occurring in the light transmission path due to various factors affect main signal transmission quality in each wavelength of a wavelength band of the light transmission path. However, it is difficult to analyze a spectrum in the light transmission path only with a spectrum measurement in a reception unit of the light transmission path.

An object of the present disclosure is to solve the problem described above, and provide a light-transmission-path-spectrum measurement device, a light-transmission-path-spectrum measurement method and a light-transmission-path-spectrum measurement program, being able to acquire detailed spectrum information in a light transmission path.

### Solution to Problem

A light-transmission-path-spectrum measurement device according to the invention is defined in appended claim 1.

### Advantageous Effects of Invention

One example embodiment is able to provide a light-transmission-path-spectrum measurement device, a light-transmission-path-spectrum measurement method and a light-transmission-path-spectrum measurement program, being able to acquire detailed spectrum information in a light transmission path.

### Brief Description of the Drawings

Fig. 1A is a diagram illustrating a configuration of a light-transmission-path system including a light-transmission-path-spectrum measurement device according to a comparative example.
Fig. 1B is a graph illustrating a cable loss trace received by the light-transmission-path-spectrum measurement device according to the comparative example, where a horizontal axis indicates reception time and a vertical axis indicates a signal level.
Fig. 2 is a configuration diagram illustrating a light-transmission-path system including a light-transmission-path-spectrum measurement device according to a first example embodiment.
Fig. 3A is a diagram illustrating an operation under a normal condition of the light-transmission-path-spectrum measurement device according to the first example embodiment.
Fig. 3B is a diagram illustrating an operation during a measurement of the light-transmission-path-spectrum measurement device according to the first example embodiment.
Fig. 4A is a diagram illustrating a light transmission path to be measured according to the first example embodiment.
Fig. 4B is a diagram illustrating a cable trace acquired by measuring the light transmission path by a basic measurement operation according to the first example embodiment, and illustrates a signal level on a short wave side.
Fig. 4C is a diagram illustrating a cable trace acquired by measuring the light transmission path by the basic measurement operation according to the first example embodiment, and illustrates a signal level of a center wavelength.
Fig. 4D is a diagram illustrating a cable trace acquired by measuring the light transmission path by the basic measurement operation according to the first example embodiment, and illustrates a signal level on a long wave side.
Fig. 5 is a diagram three-dimensionally illustrating an output spectrum of each repeater being acquired by plotting a peak level of a cable trace acquired by the basic measurement operation according to the first example embodiment.
Fig. 6A is a diagram acquired by extracting an output spectrum in a representative repeater from the three-dimensional data in Fig. 5, and illustrates a case of a light transmission path input unit.
Fig. 6B is a diagram acquired by extracting an output spectrum in a representative repeater from the three-dimensional data in Fig. 5, and illustrates a case of a repeater REP4.
Fig. 6C is a diagram acquired by extracting an output spectrum in a representative repeater from the three-dimensional data in Fig. 5, and illustrates a case of a repeater REP5.
Fig. 6D is a diagram acquired by extracting an output spectrum in a representative repeater from the three-dimensional data in Fig. 5, and illustrates a case of a repeater REP10.
Fig. 7A is a diagram illustrating a light transmission path to be measured according to the first example embodiment.
Fig. 7B is a diagram illustrating a cable trace acquired by measuring the light transmission path by the basic measurement operation according to the first example embodiment, and illustrates a signal level on a short wave side.
Fig. 7C is a diagram illustrating a cable trace acquired by measuring the light transmission path by the basic measurement operation according to the first example embodiment, and illustrates a signal level of a center wavelength.
Fig. 7D is a diagram illustrating a cable trace acquired by measuring the light transmission path by the basic measurement operation according to the first example embodiment, and illustrates a signal level on a long wave side.
Fig. 8 is a diagram three-dimensionally illustrating an output spectrum of each repeater being acquired by plotting a peak level of a cable trace acquired by the basic measurement operation according to the first example embodiment.
Fig. 9A is a diagram acquired by extracting an output spectrum in a representative repeater from the three-dimensional data in Fig. 8, and illustrates a case of the light transmission path input unit.
Fig. 9B is a diagram acquired by extracting an output spectrum in a representative repeater from the three-dimensional data in Fig. 8, and illustrates a case of the repeater REP4.
Fig. 9C is a diagram acquired by extracting an output spectrum in a representative repeater from the three-dimensional data in Fig. 8, and illustrates a case of repeaters REP5 to REP9.
Fig. 9D is a diagram acquired by extracting an output spectrum in a representative repeater from the three-dimensional data in Fig. 8, and illustrates a case of the repeater REP10.
Fig. 10A is a diagram illustrating a light transmission path to be measured according to the first example embodiment.
Fig. 10B is a diagram illustrating a cable trace acquired by measuring the light transmission path by the basic measurement operation according to the first example embodiment, and illustrates a signal level on a short wave side.
Fig. 10C is a diagram illustrating a cable trace acquired by measuring the light transmission path by the basic measurement operation according to the first example embodiment, and illustrates a signal level of a center wavelength.
Fig. 10D is a diagram illustrating a cable trace acquired by measuring the light transmission path by the basic measurement operation according to the first example embodiment, and illustrates a signal level on a long wave side.
Fig. 11 is a diagram three-dimensionally illustrating an output spectrum of each repeater being acquired by plotting a peak level of a cable trace acquired by the basic measurement operation according to the first example embodiment.
Fig. 12A is a diagram acquired by extracting an output spectrum in a representative repeater from the three-dimensional data in Fig. 11, and illustrates a case of the light transmission path input unit.
Fig. 12B is a diagram acquired by extracting an output spectrum in a representative repeater from the three-dimensional data in Fig. 11, and illustrates a case of the repeater REP4.
Fig. 12C is a diagram acquired by extracting an output spectrum in a representative repeater from the three-dimensional data in Fig. 11, and illustrates a case of the repeater REP5.
Fig. 12D is a diagram acquired by extracting an output spectrum in a representative repeater from the three-dimensional data in Fig. 11, and illustrates a case of the repeaters REP6 to REP 10.
Fig. 13 is a diagram illustrating a light transmission path to be measured according to the first example embodiment.
Fig. 14 is a diagram three-dimensionally illustrating an output spectrum of each repeater being acquired by plotting a peak level of a cable trace acquired by the basic measurement operation according to the first example embodiment.
Fig. 15A is a diagram acquired by extracting an output spectrum in a representative repeater from the three-dimensional data in Fig. 14, and illustrates a case of the light transmission path input unit.
Fig. 15B is a diagram acquired by extracting an output spectrum in a representative repeater from the three-dimensional data in Fig. 14, and illustrates a case of the repeater REP4.
Fig. 15C is a diagram acquired by extracting an output spectrum in a representative repeater from the three-dimensional data in Fig. 14, and illustrates a case of the repeater REP5.
Fig. 15D is a diagram acquired by extracting an output spectrum in a representative repeater from the three-dimensional data in Fig. 14, and illustrates a case of the repeater REP 10.
Fig. 16 is a configuration diagram illustrating a light-transmission-path system including a light-transmission-path-spectrum measurement device according to a second example embodiment.

### Description of Example Embodiments

### (Comparative Example)

First, before description of a light-transmission-path-spectrum measurement device and a light-transmission-path system according to an example embodiment, a light-transmission-path-spectrum measurement device and a light-transmission-path system according to a comparative example will be described. In this way, the present example embodiment is made more clear.

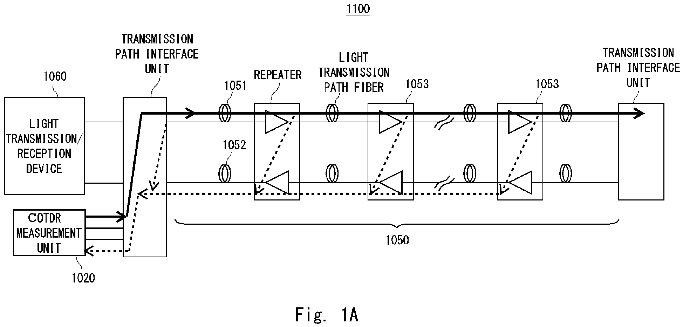

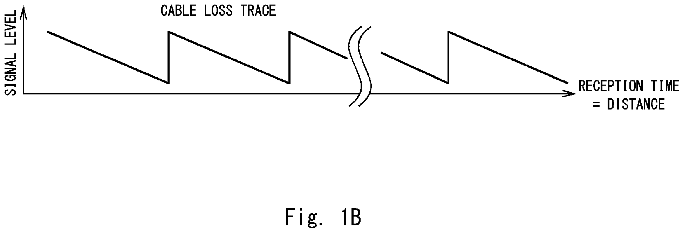

Fig. 1A is a diagram illustrating a configuration of the light-transmission-path system including the light-transmission-path-spectrum measurement device according to the comparative example, and Fig. 1B is a graph illustrating a cable loss trace received by the light-transmission-path-spectrum measurement device according to the comparative example, where a horizontal axis indicates reception time and a vertical axis indicates a signal level. As illustrated in Fig. 1A, a light-transmission-path system 1100 according to the comparative example includes a coherent optical time domain reflectometry (COTDR) measurement unit 1020. The COTDR measurement unit 1020 is used for a measurement of a cable loss trace in the light-transmission-path system 1100 laid on a sea bottom. The light-transmission-path system 1100 is formed of a light transmission path 1050 including light transmission path fibers 1051 and 1052 in both transmission and reception directions and a repeater 1053, and a light transmission/reception device 1060 connected to a land station at both ends of the light transmission path 1050.

In the comparative example, a transmission unit and a reception unit of the COTDR measurement unit 1020 are connected to a monitoring measurement port of the light transmission/reception device 1060. COTDR measurement light is transmitted from the COTDR measurement unit 1020 to the light transmission path fiber 1051 via the light transmission/reception device 1060, and a part of the COTDR measurement light returns to a direction opposite to a transmission direction by Rayleigh scattering and the like in the light transmission path fiber 1051. The COTDR measurement light moving backward in the transmission fiber returns to a light transmission path fiber 1052 in an opposite direction due to a loopback path mounted on the repeater 1053, and the COTDR measurement unit 1020 receives the COTDR measurement light. Then, a cable loss trace illustrated in Fig. 1B is acquired.

The measurement light output from the COTDR measurement unit 1020 is normally an optical pulse, and a relationship between a reception power level and a distance can be acquired as a cable loss trace from reception time of return light. The acquired cable loss trace normally has the highest level at an output end of the repeater 1053, and has a lower level toward a farther end of a relay span. In the light-transmission-path system 1100, by the cable loss trace, the COTDR measurement is utilized for a use for determining a rupture position at a time of cable trouble, and the like.

### (First Example Embodiment)

### <Configuration of Light-transmission-path-spectrum Measurement Device>

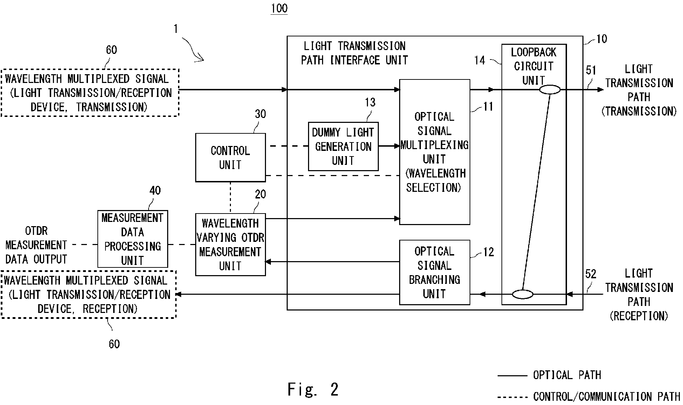

Next, a light-transmission-path system including a light-transmission-path-spectrum measurement device according to a first example embodiment will be described. Fig. 2 is a configuration diagram illustrating the light-transmission-path system including the light-transmission-path-spectrum measurement device according to the first example embodiment. As illustrated in Fig. 2, a light-transmission-path system 100 includes a light transmission/reception device 60 and a light-transmission-path-spectrum measurement device 1. The light transmission/reception device 60 transmits a wavelength multiplexed signal to a light transmission path 51, and also receives a wavelength multiplexed signal from a light transmission path 52. Note that, the light transmission path 51 and the light transmission path 52 are relayed by a plurality of repeaters. The light-transmission-path-spectrum measurement device 1 includes a light transmission path interface unit 10, a wavelength varying OTDR measurement unit 20, a control unit 30, and a measurement data processing unit 40. The light-transmission-path-spectrum measurement device 1 is a device that acquires a cable loss trace.

The light transmission path interface unit 10 includes an optical signal multiplexing unit 11, an optical signal branching unit 12, a dummy light generation unit 13, and a loopback circuit unit 14. The light transmission path interface unit 10 includes an interface that transmits and receives a wavelength multiplexed signal to and from the light transmission paths 51 and 52. The light transmission path interface unit 10 is connected to the light transmission paths 51 and 52 with the interface. Further, the light transmission path interface unit 10 includes an interface that transmits and receives a wavelength multiplexed signal to and from the light transmission/reception device 60. Note that, a plurality of the interfaces may be provided. The light transmission path interface unit 10 includes a transmission port and a reception port of measurement light of the wavelength varying OTDR measurement unit 20. The transmission port and the reception port each are connected to the optical signal multiplexing unit 11 and the optical signal branching unit 12 in the light transmission path interface unit 10, respectively.

The optical signal multiplexing unit 11 includes an input port of a wavelength multiplexed signal, an input port of dummy light from the dummy light generation unit 13, and an input port of OTDR measurement light from the wavelength varying OTDR measurement unit 20. The optical signal multiplexing unit 11 may include a wavelength selective switch typified by a wavelength selectable switch (WSS). For example, the wavelength selective switch selects a wavelength of measurement light being generated by the wavelength varying OTDR measurement unit 20. The optical signal multiplexing unit 11 can select a wavelength of input light from the input ports, multiplexes the input wavelength, and outputs the multiplexed wavelength to the light transmission path 51. Specifically, for example, the optical signal multiplexing unit 11 selects a wavelength of measurement light being generated by the wavelength varying OTDR measurement unit 20, and outputs the selected wavelength to the light transmission path 51.

The dummy light generation unit 13 supplies dummy light disposed instead of a wavelength multiplexed signal. The dummy light generation unit 13 may not be needed depending on an arrangement or a number of wavelengths of a wavelength multiplexed signal, and a main signal transmission characteristic.

The loopback circuit unit 14 is applied when a cable trace of a transmission fiber in a first relay section of a light transmission path is acquired in an OTDR measurement. The loopback circuit unit 14 has a function of performing loopback, to a reception-side path, on Rayleigh scattered light in the same relay section of an OTDR measurement signal. The loopback circuit unit 14 may not be needed when the same section is not needed. Note that, a "relay section" refers to a section from an output end of a certain repeater to an input end of a next repeater.

The optical signal branching unit 12 has a function of branching a wavelength multiplexed signal from the light transmission path 52 into the light transmission/reception device 60 side and the wavelength varying OTDR measurement unit 20 side. A branching method may be wavelength branching, power branching, and the like, which is not limited here.

The wavelength varying OTDR measurement unit 20 has a function of being able to perform an OTDR measurement on the light transmission path 51 by varying a wavelength of measurement light across the entire wavelength band of the light transmission path 51. Specifically, the wavelength varying OTDR measurement unit 20 varies and generates a wavelength of measurement light transmitted to the light transmission path 51. Moreover, the wavelength varying OTDR measurement unit 20 measures return light acquired from the measurement light being returned by a repeater connected to the light transmission path 51. In this way, the wavelength varying OTDR measurement unit 20 acquires a cable trace across the wavelength band in the light transmission path 51. The wavelength varying OTDR measurement unit 20 includes a transmission port and a reception port of an OTDR measurement signal. Further, the wavelength varying OTDR measurement unit 20 can output an OTDR measurement result to the outside.

The control unit 30 has a function of selecting and controlling, by a control signal, a measurement wavelength of the wavelength varying OTDR measurement unit 20 and an output wavelength in the optical signal multiplexing unit 11. In other words, the control unit 30 controls a wavelength of measurement light being generated by the wavelength varying OTDR measurement unit 20 and a wavelength of measurement light being selected by the optical signal multiplexing unit 11. Specifically, for example, the control unit 30 controls the wavelength varying OTDR measurement unit 20 in such a way as to perform sweeping across a wavelength band of the light transmission path 51 while switching a wavelength of measurement light generated by the wavelength varying OTDR measurement unit 20. Further, the control unit 30 controls the optical signal multiplexing unit 11 in such a way as to block a portion near a wavelength of measurement light in a wavelength multiplexed signal transmitted to the light transmission path 51.

The measurement data processing unit 40 has a function of performing data processing on OTDR measurement data being measured by the wavelength varying OTDR measurement unit 20. Further, the measurement data processing unit 40 extracts a reception level in each wavelength of measurement light for each position of the light transmission path 51. Then, the measurement data processing unit 40 acquires a spectrum in a predetermined position in the light transmission path 51. Furthermore, the measurement data processing unit 40 generates three-dimensional data about a level deviation of measurement light with, as an axis, a positional direction of the light transmission path 51 and a wavelength direction of the measurement light, based on the acquired spectrum.

### <Operation of Light-transmission-path-spectrum Measurement Device>

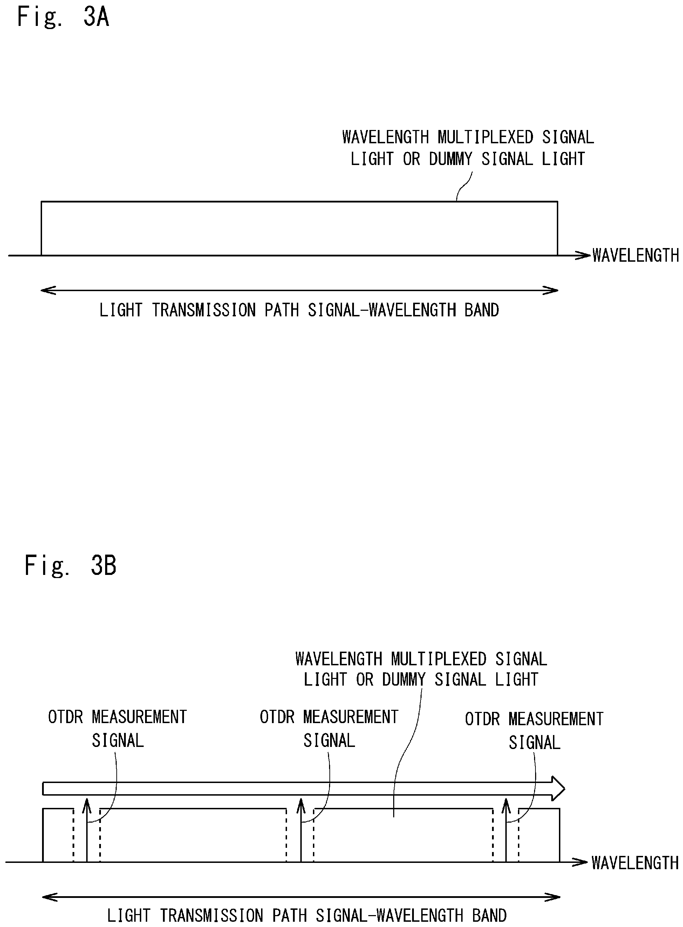

Next, an operation of the light-transmission-path-spectrum measurement device 1 will be described. Fig. 3A is a diagram illustrating an operation under a normal condition of the light-transmission-path-spectrum measurement device according to the first example embodiment, and Fig. 3B is a diagram illustrating an operation during a measurement of the light-transmission-path-spectrum measurement device according to the first example embodiment.

Similarly to the comparative example, it is assumed that the wavelength varying OTDR measurement unit 20 according to the present example embodiment can acquire a cable trace. As illustrated in Fig. 3A, in the present example embodiment, the optical signal multiplexing unit 11 controls a wavelength of an optical signal to be transmitted from the light transmission path interface unit 10 to the light transmission path 51. For example, a wavelength of wavelength multiplexed signal light from a transmission side or dummy signal light from the dummy light generation unit 13 spans, as a transmission signal to the light transmission path 51, across a wavelength band of the light transmission path 51.

As illustrated in Fig. 3B, the control unit 30 controls a wavelength arrangement state during a measurement of the light transmission path 51 in the present example embodiment. The control unit 30 sweeps a measurement wavelength and performs a measurement while controlling, in a manner indicated below, a wavelength of measurement light being generated by the wavelength varying OTDR measurement unit 20 and a wavelength of measurement light being output from the optical signal multiplexing unit 11.

In other words, for the control, an OTDR measurement is performed by sweeping the entire wavelength band of the light transmission path 51 while switching a wavelength of measurement light of an OTDR signal. Further, the optical signal multiplexing unit 11 blocks a portion around a wavelength of OTDR measurement light to be measured in a wavelength multiplexed signal (or a dummy signal). By such an operation, the wavelength varying OTDR measurement unit 20 acquires a cable trace in the entire wavelength band of the light transmission path 51. Then, the measurement data processing unit 40 extracts an OTDR measurement level in each wavelength of measurement light for each distance in the light transmission path 51. Then, a spectrum in any distance position in the light transmission path 51 is acquired. Further, the measurement data processing unit 40 can generate three-dimensional data/graph information about a level deviation in a distance direction and a wavelength direction of the light transmission path, based on processed spectrum information, and provide the three-dimensional data/graph information to the outside.

In this way, a light-transmission-path-spectrum measurement method as an operation of the light-transmission-path-spectrum measurement device 1 according to the present example embodiment includes: a step of varying and generating a wavelength of measurement light to be transmitted to the light transmission path 51; a step of selecting the wavelength of the generated measurement light, and outputting the selected wavelength to the light transmission path 51; a step of controlling the wavelength of the measurement light to be generated and the wavelength of the measurement light to be selected; a step of measuring return light acquired from the measurement light being returned, by a repeater connected to the light transmission path 51, via the light transmission path 52; and a step of processing measurement data about the measured return light. Then, the light-transmission-path-spectrum measurement method further includes performing sweeping across a wavelength band of the light transmission path 51 while switching the wavelength of the measurement light to be generated, and blocking a portion near the wavelength of the measurement light in a wavelength multiplexed signal transmitted to the light transmission path 51, in the step of selecting the wavelength of the generated measurement light, and outputting the selected wavelength to the light transmission path 51.

In the present example embodiment, a spectrum in any position in each relay section of a light transmission path can be acquired, and a spectrum at an output end of each repeater can be measured and extracted at a high speed by setting an average measurement number in one wavelength as minimum, and measuring only a peak level of each repeater at a high level. In this way, the light-transmission-path-spectrum measurement device 1 according to the present example embodiment performs an operation of scanning to a spectrum in any position in each relay section when time for scanning is spent. Further, the light-transmission-path-spectrum measurement device 1 performs, at a high speed, an operation of scanning spectrum acquisition at an output end of each repeater in a light transmission path. Hereinafter, the operation of the light-transmission-path-spectrum measurement device 1 is divided into <spectrum acquisition in normal state>, <acquired spectrum during cable loss increase>, <acquired spectrum during output decrease of repeater>, and <acquired spectrum when light transmission gain wavelength deviation is present>, and will be specifically described.

### <Spectrum Acquisition in Normal State>

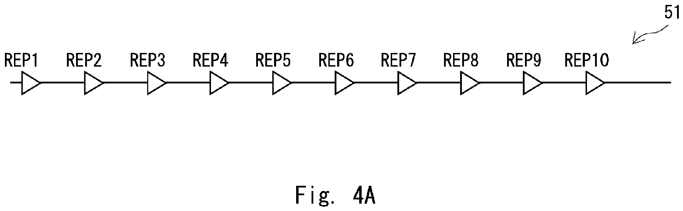

Fig. 4A is a diagram illustrating a light transmission path to be measured according to the first example embodiment. Fig. 4A only illustrates the light transmission path 51 on the transmission side for simplification, and illustrates, for example, the light transmission path 51 formed of 10 repeaters REP1 to REP10. In the present example embodiment, description is given on an assumption that the repeaters REP1 to REP10 constituting the light transmission path 51 perform an output constant operation for simplifying the description. Further, it is assumed that the light transmission path 51 is in a normal state without trouble and the like in each of the repeaters REP1 to REP10 and a cable, and a gain wavelength deviation in each relay section is extremely good (flat).

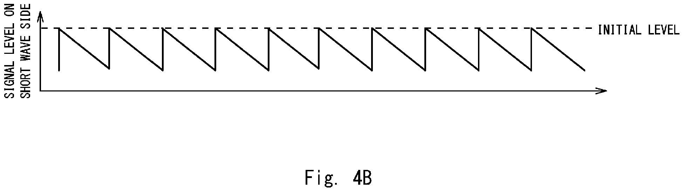

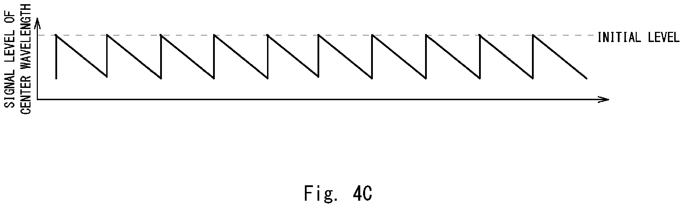

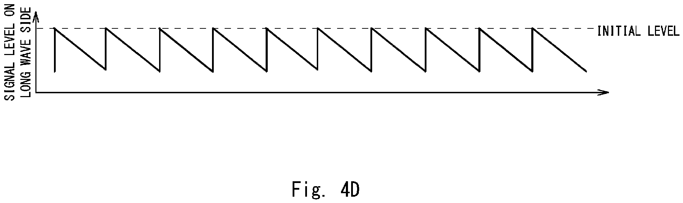

Figs. 4B to 4D are diagrams illustrating a cable trace acquired by measuring the light transmission path by a basic measurement operation (Figs. 3A and 3B) according to the first example embodiment. As a representative, Fig. 4B illustrates a signal level on a short wave side, Fig. 4C illustrates a signal level of a center wavelength, and Fig. 4D illustrates a signal level on a long wave side.

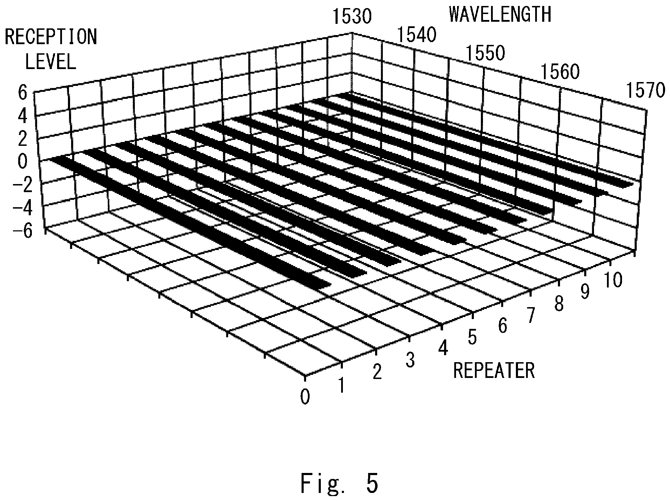

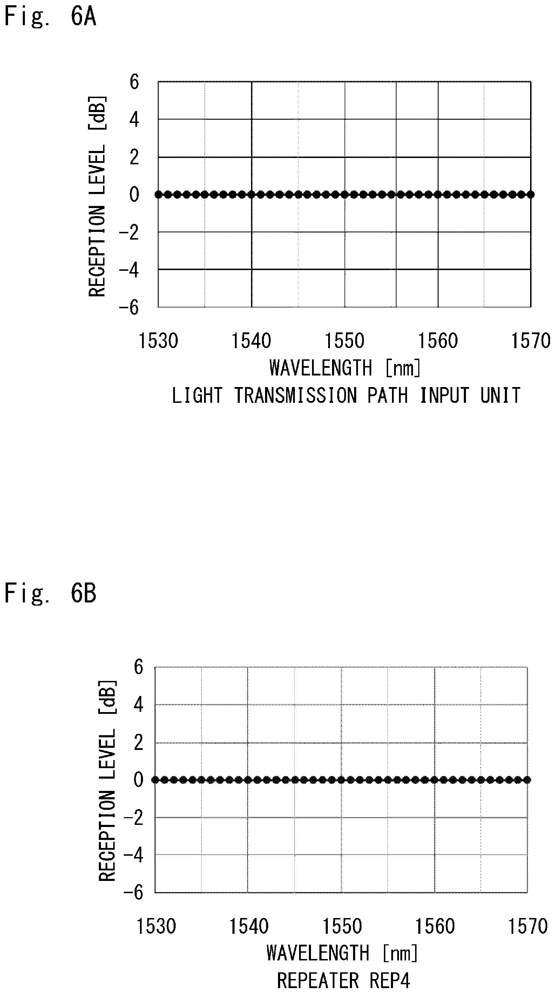

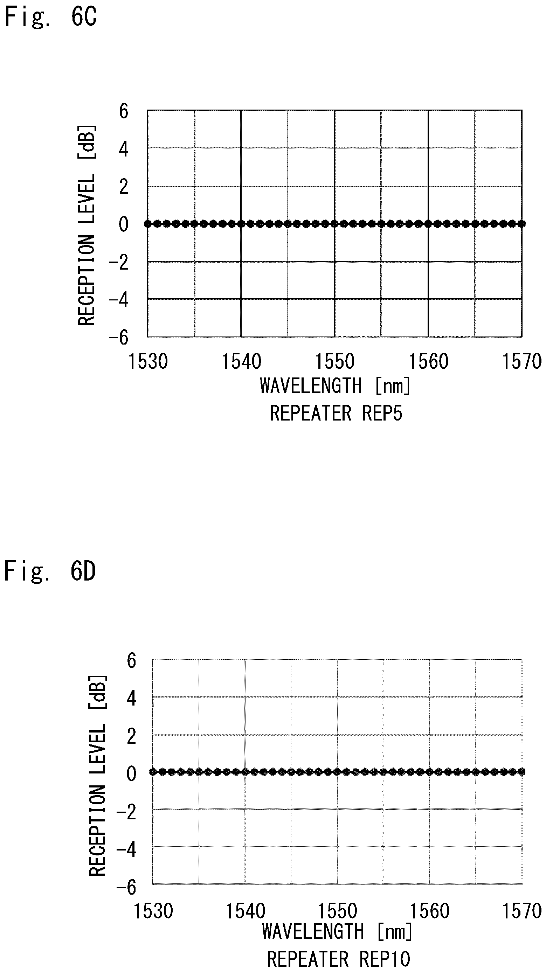

Fig. 5 is a diagram three-dimensionally illustrating an output spectrum of each repeater being acquired by plotting a peak level of a cable trace acquired by the basic measurement operation (Figs. 3A and 3B) according to the first example embodiment. Figs. 6A to 6D are diagrams acquired by extracting an output spectrum in a representative repeater from the three-dimensional data in Fig. 5, Fig. 6A illustrates a case of a light transmission path input unit, Fig. 6B illustrates a case of the repeater REP4, Fig. 6C illustrates a case of the repeater REP5, and Fig. 6D illustrates a case of the repeater REP10.

As illustrated in Figs. 4A to 4D, 5, and 6A to 6D, in the light transmission path 51 being in a normal state and having ideal flatness, a similar cable trace is acquired in the entire wavelength band regardless of a wavelength of OTDR measurement light. A trace level at each repeater end is constant similarly to an initial level. In an operation of acquiring a spectrum at an output end of each repeater, a cable trace in the entire span region does not need to be acquired. Thus, by sweeping an OTDR measurement of each wavelength at a high speed, spectrum acquisition in a relatively short time can be achieved. In this way, also in Figs. 5 and 6A to 6D of the acquired spectrum, a flat output spectrum can be acquired in the entire light transmission path 51.

### <Acquired Spectrum during Cable Loss Increase>

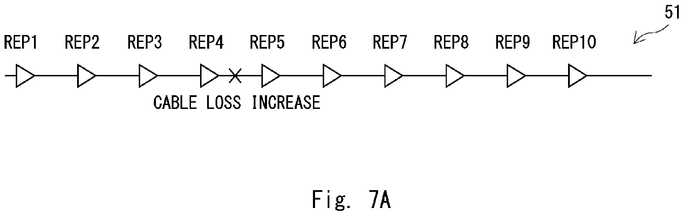

Next, a spectrum acquisition operation of a repeater output end in a cable loss increasing state will be described. Fig. 7A is a diagram illustrating a light transmission path to be measured according to the first example embodiment. Fig. 7A only illustrates the light transmission path 51 on the transmission side for simplification, and illustrates, for example, the light transmission path 51 formed of 10 repeaters REP1 to REP10. In the present example embodiment, description is given on an assumption that the repeaters REP1 to REP10 constituting the light transmission path 51 perform an output constant operation for simplifying the description. In Fig. 7A, a situation where a loss in a cable between the repeater REP4 and the repeater REP5 increases is assumed to be a cable loss increasing state.

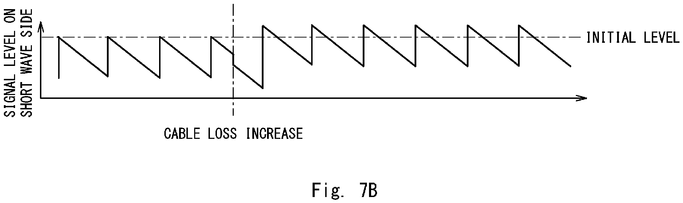

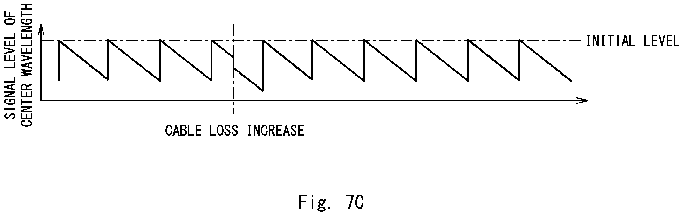

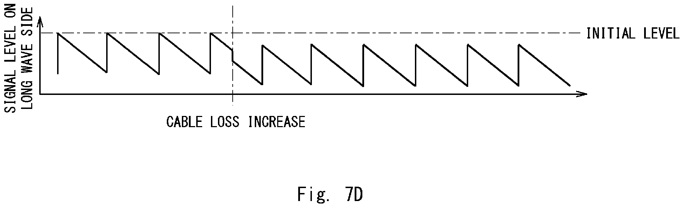

Figs. 7B to 7D are diagrams illustrating a cable trace acquired by measuring the light transmission path by the basic measurement operation (Figs. 3A and 3B) according to the first example embodiment. As a representative, Fig. 7B illustrates a signal level on a short wave side, Fig. 7C illustrates a signal level of a center wavelength, and Fig. 7D illustrates a signal level on a long wave side.

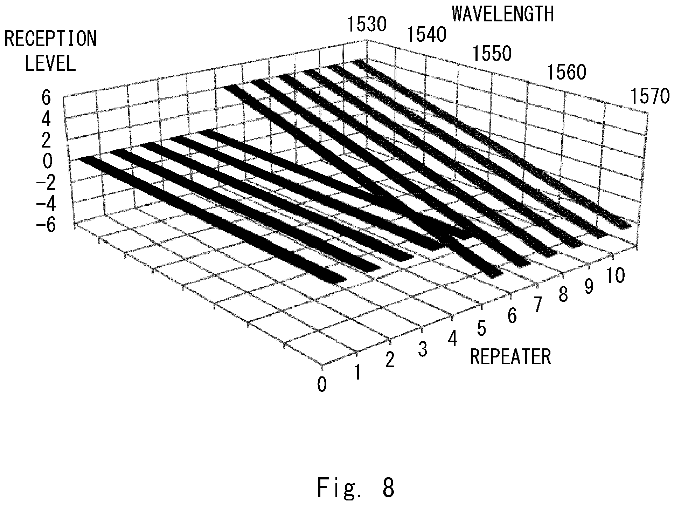

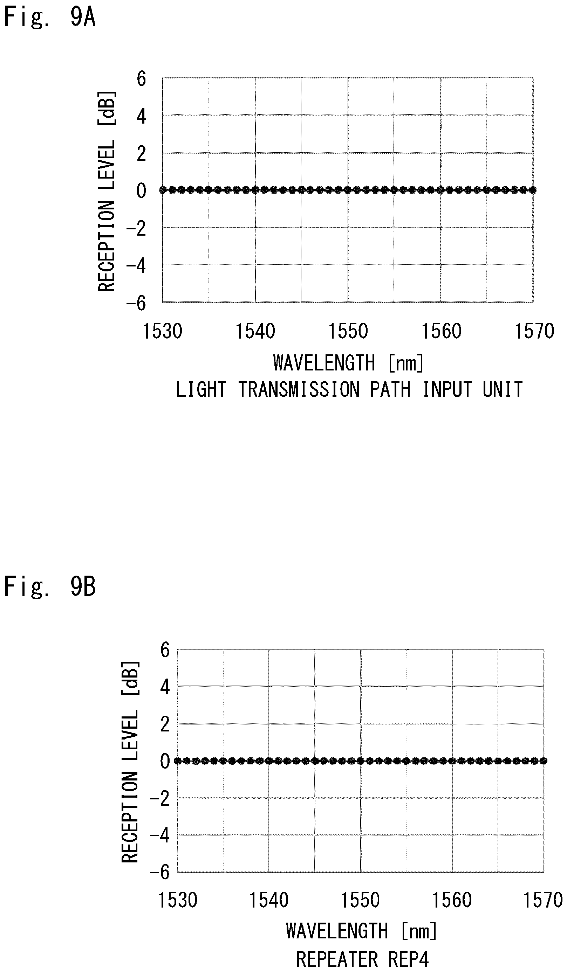

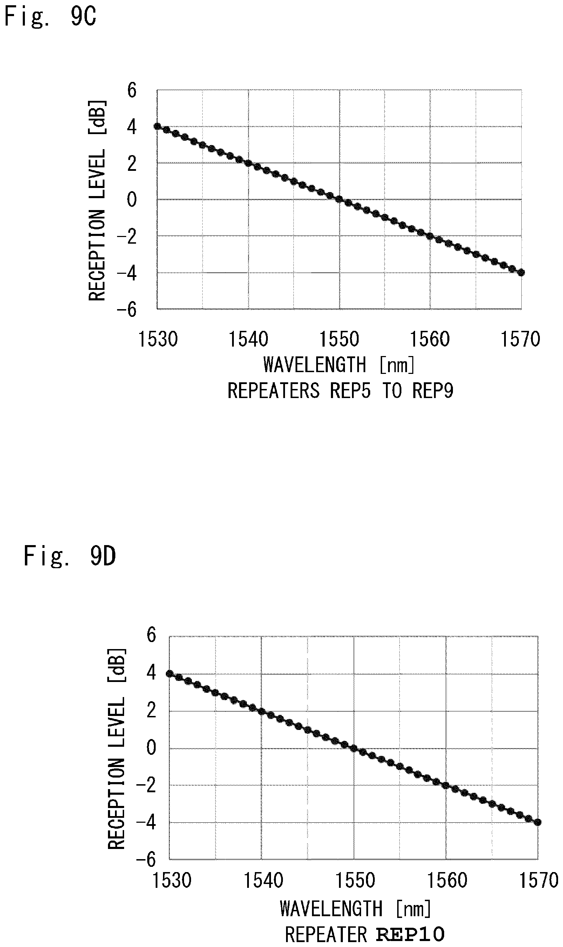

Fig. 8 is a diagram three-dimensionally illustrating an output spectrum of each repeater being acquired by plotting a peak level of a cable trace acquired by the basic measurement operation (Figs. 3A and 3B) according to the first example embodiment. Figs. 9A to 9D are diagrams acquired by extracting an output spectrum in a representative repeater from the three-dimensional data in Fig. 8, Fig. 9A illustrates a case of the light transmission path input unit, Fig. 9B illustrates a case of the repeater REP4, Fig. 9C illustrates a case of the repeaters REP5 to REP9, and Fig. 9D illustrates a case of the repeater REP10.

In a light transmission path in a cable loss increasing state, as in Figs. 7A to 7D, a loss increase (level decrease) is observed in a trouble position in a cable trace of each wavelength. A similar cable trace is acquired in the entire wavelength band regardless of an OTDR measurement wavelength. However, since output constant control is performed on the repeater used for the light transmission path 51, a gain of the repeater REP5 in a next stage increases, and a gain inclination declining at a long wave occurs. At this time, a peak level of a cable trace of each repeater after the repeater REP5 does not change at the center wavelength, but is higher than an initial level on the short wave side, and is lower than the initial level on the long wave side. In Figs. 8 and 9A to 9D of the spectrum acquired above at the output end of each repeater, it is clear that occurrence of a level deviation in each relay section can be visualized. In the present example, it can be visually confirmed that the short wave side is susceptible to non-linear degradation of a main signal in each span after the repeater REP5, and OSNR degradation of a main signal is concerned on the long wave side.

### <Acquired Spectrum during Output Decrease of Repeater>

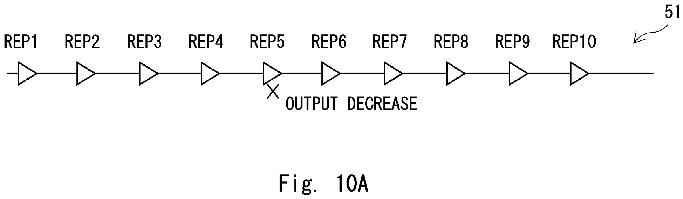

Next, a spectrum acquisition operation of a repeater output end in a repeater output decreasing state will be described. Fig. 10A is a diagram illustrating a light transmission path to be measured according to the first example embodiment. Fig. 10A only illustrates the light transmission path 51 on the transmission side for simplification, and illustrates, for example, the light transmission path 51 formed of 10 repeaters REP1 to REP 10. In the present example embodiment, description is given on an assumption that each of the repeaters other than the repeater REP5 constituting the light transmission path 51 performs an output constant operation for simplifying the description. In Fig. 10A, a situation where an EDF output of a repeater output of the repeater REP5 decreases is assumed to be a repeater output decreasing state.

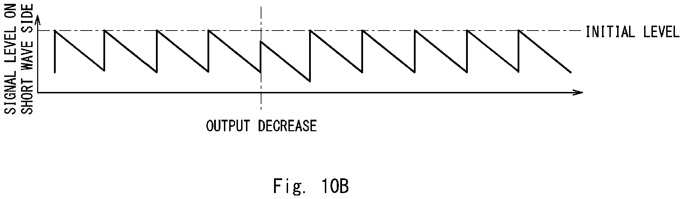

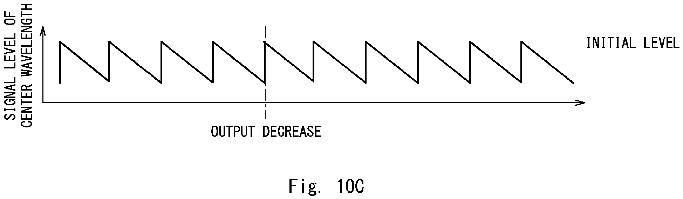

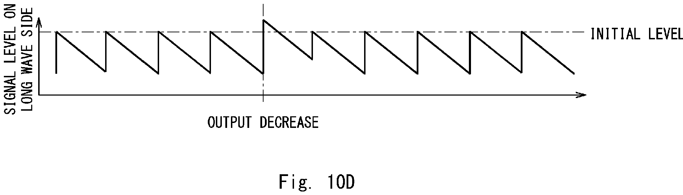

Figs. 10B to 10D are diagrams illustrating a cable trace acquired by measuring the light transmission path by the basic measurement operation (Figs. 3A and 3B) according to the first example embodiment. As a representative, Fig. 10B illustrates a signal level on a short wave side, Fig. 10C illustrates a signal level of a center wavelength, and Fig. 10D illustrates a signal level on a long wave side.

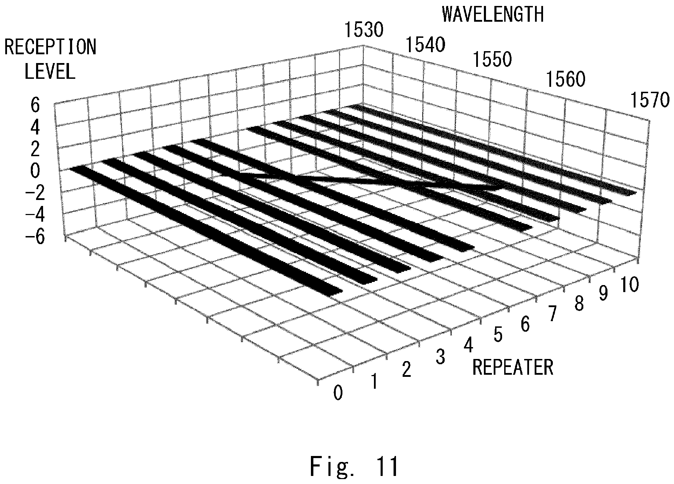

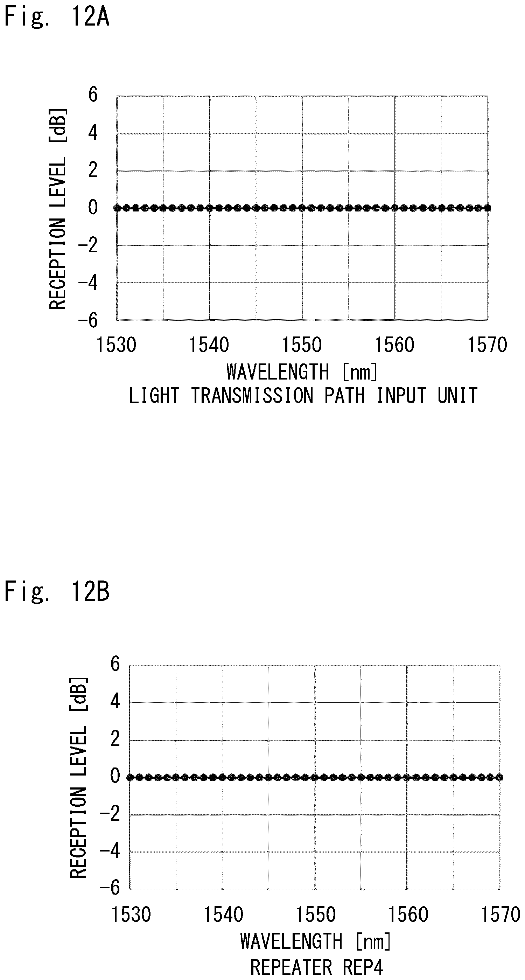

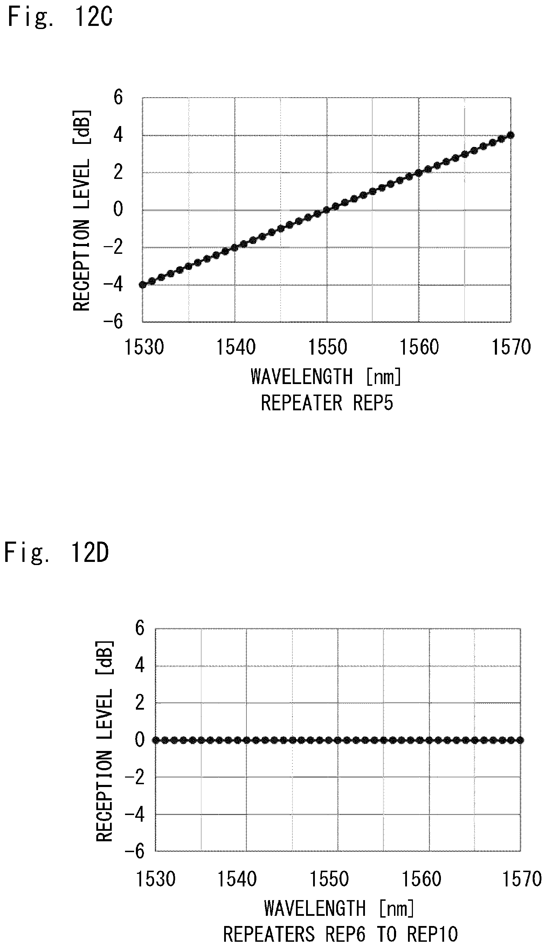

Fig. 11 is a diagram three-dimensionally illustrating an output spectrum of each repeater being acquired by plotting a peak level of a cable trace acquired by the basic measurement operation (Figs. 3A and 3B) according to the first example embodiment. Figs. 12A to 12D are diagrams acquired by extracting an output spectrum in a representative repeater from the three-dimensional data in Fig. 11, Fig. 12A illustrates a case of the light transmission path input unit, Fig. 12B illustrates a case of the repeater REP4, Fig. 12C illustrates a case of the repeater REP5, and Fig. 12D illustrates a case of the repeaters REP6 to REP10.

In the light transmission path 51 in the repeater output decreasing state, as in Figs. 10A to 10D, a repeater gain decreases in a repeater in which an output decrease occurs, and thus a gain inclination declining at a short wave occurs. At this time, a peak level of a cable trace of the repeater REP5 does not change at the center wavelength, but is lower than an initial level on the short wave side, and is higher than the initial level on the long wave side.

In the subsequent repeater REP6, input total power of the repeater REP5 decreases, but output total power does not change due to repeater output constant control. Thus, a gain increases as a result, and a gain inclination declining at a long wave occurs. This cancels out the gain inclination declining at the short wave that occurs in the previous stage, and a gain inclination hardly occurs at an output end of the repeater REP6.

In Figs. 11 and 12A to 12D of the spectrum acquired above at the output end of each repeater, occurrence of a level deviation in each relay section in the state can be visualized. In the present example, the gain inclination declining at the short wave occurs only in the repeater REP5. A main signal on the long wave side is susceptible to non-linear degradation only between the repeater REP5 and the repeater REP6. OSNR degradation of a main signal is concerned on the short wave side. In the present example embodiment, such points can be visually confirmed. In a case of such an instance, a change is hardly observed in a spectrum measured at a reception end after light transmission. Thus, a state of a deviation of a spectrum in the light transmission path 51 cannot be observed. However, according to the light-transmission-path-spectrum measurement method in the present example embodiment in contrast to a measurement method at a reception end after light transmission, occurrence of a level deviation in each relay section can be measured.

### <Acquired Spectrum When Light Transmission Gain Wavelength Deviation is Present>

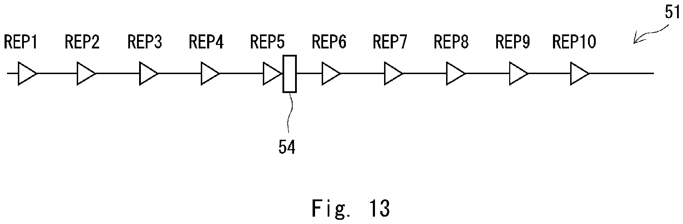

Next, a spectrum acquisition operation of a repeater output end in a state where a gain wavelength deviation is present in each repeater output in a light transmission path will be described. Fig. 13 is a diagram illustrating a light transmission path to be measured according to the first example embodiment. Fig. 13 only illustrates the light transmission path 51 on the transmission side for simplification, and illustrates, for example, the light transmission path 51 formed of 10 repeaters REP1 to REP10. In the present example embodiment, description is given on an assumption that the repeaters REP1 to REP10 constituting the light transmission path 51 perform an output constant operation for simplifying the description. Further, a gain equalizer 54 is attached to the repeater REP5.

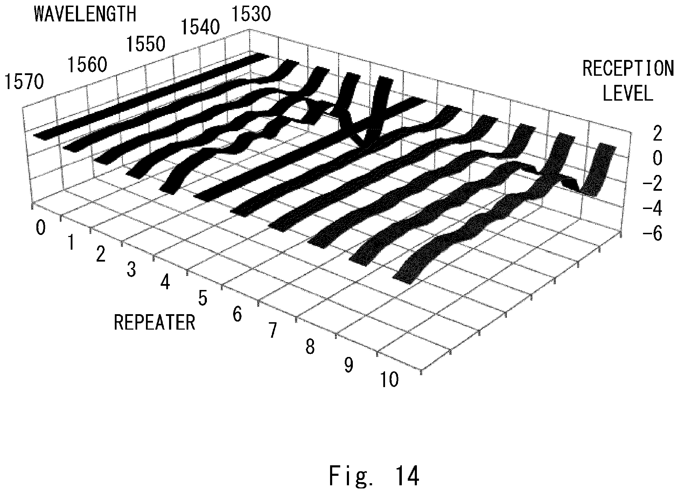

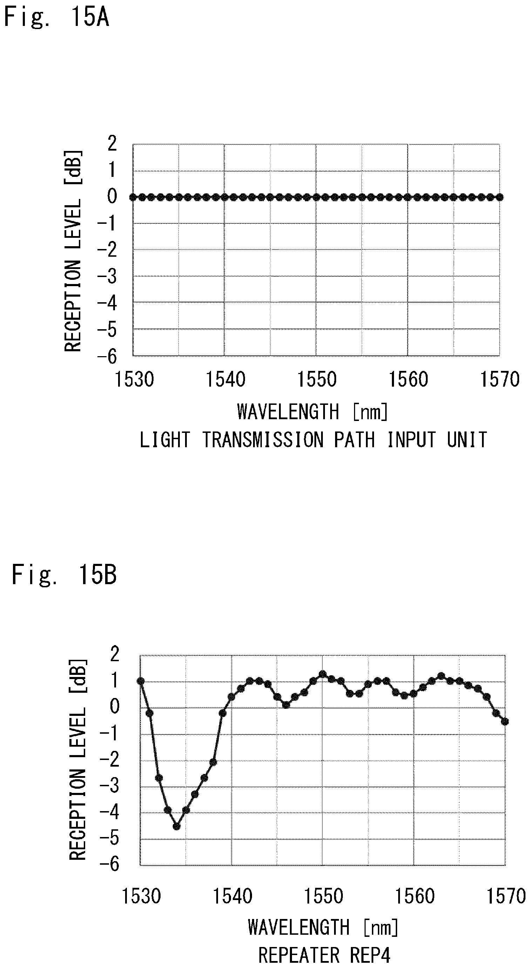

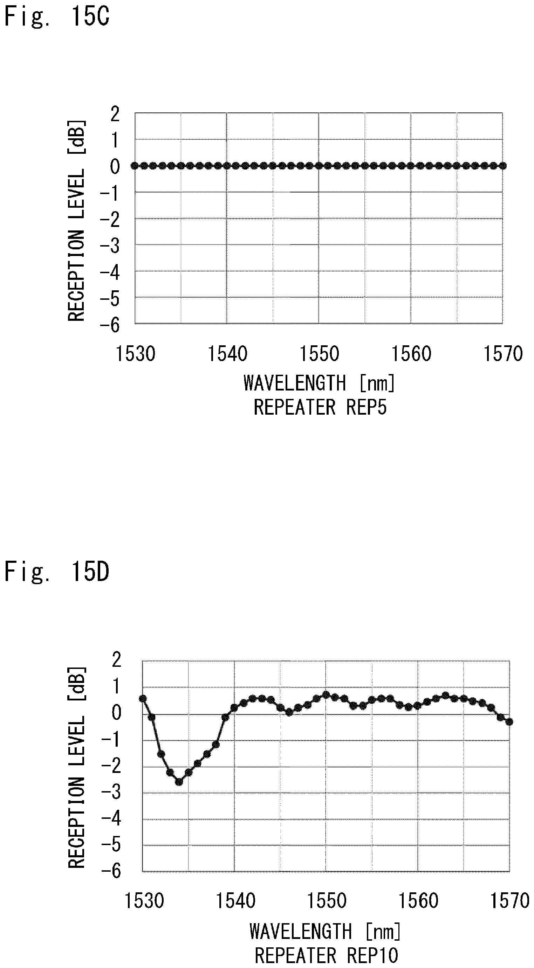

Fig. 14 is a diagram three-dimensionally illustrating an output spectrum of each repeater being acquired by plotting a peak level of a cable trace acquired by the basic measurement operation (Figs. 3A and 3B) according to the first example embodiment. Figs. 15A to 15D are diagrams acquired by extracting an output spectrum in a representative repeater from the three-dimensional data in Fig. 14, Fig. 15A illustrates a case of the light transmission path input unit, Fig. 15B illustrates a case of the repeater REP4, Fig. 15C illustrates a case of the repeater REP5, and Fig. 15D illustrates a case of the repeater REP10.

In the example in Figs. 4A to 12D, an ideal example without gain wavelength dependence of each repeater is used for description in order to simplify the description, but an individual variation and an environmental variation such as temperature are present in the gain wavelength dependence of each repeater in the light transmission path 51 in a normal light-transmission-path system. Then, a deviation is more likely to be accumulated when a number of relays becomes a multistage due to gain wavelength dependence of an EDF itself in the repeater REP, and becomes a greater deviation.

In the present example, it is assumed that a gain wavelength deviation between the repeater REP1 to the repeater REP4 is generated and accumulated. The gain equalizer 54 attached to the repeater REP5 makes an accumulated deviation flat and equivalent. Hereinafter, a deviation is also accumulated in the repeater REP6 to the repeater REP10. Figs. 14 and 15A to 15D illustrate such an example. Also in the present example, it is difficult to specifically recognize a deviation at each place in a light transmission path only with spectrum information at a reception end after light transmission. According to the light-transmission-path-spectrum measurement method in the present example embodiment in contrast to a measurement method at a reception end after light transmission, a deviation at each place in the light transmission path 51 can be visualized and confirmed.

Next, an effect of the present example embodiment will be described. In the present example embodiment, the control unit 30 controls a wavelength of measurement light being generated by the wavelength varying OTDR measurement unit 20 and a wavelength of measurement light being selected by the optical signal multiplexing unit 11. In this way, detailed spectrum information in the light transmission path 51 can be acquired.

The control unit 30 controls the optical signal multiplexing unit 11 in such a way as to block a portion near a wavelength of measurement light in a wavelength multiplexed signal transmitted to the light transmission path 51. Further, the control unit 30 controls the wavelength varying OTDR measurement unit 20 in such a way as to perform sweeping across a wavelength band of the light transmission path 51 while switching a wavelength of measurement light to be generated. Thus, spectrum information in any distance of the light transmission path 51 can be acquired. Further, an output spectrum of each of the repeaters REP of the light transmission path 51 can be acquired in a short time.

The wavelength varying OTDR measurement unit 20 acquires a cable trace across the wavelength band of the light transmission path 51. By measuring only a reception level of a peak portion of a cable trace, an output spectrum of the repeater REP can be acquired in a short time.

The measurement data processing unit 40 extracts a reception level in each wavelength of measurement light for each position of the light transmission path 51, and acquires a spectrum in a predetermined position of the light transmission path 51. In this way, three-dimensional data about a level deviation of measurement light with, as an axis, a positional direction of the light transmission path 51 and a wavelength direction of the measurement light can be acquired. Thus, more detailed design of main signal transmission performance in the light transmission path 51 can be achieved.

### (Second Example Embodiment)

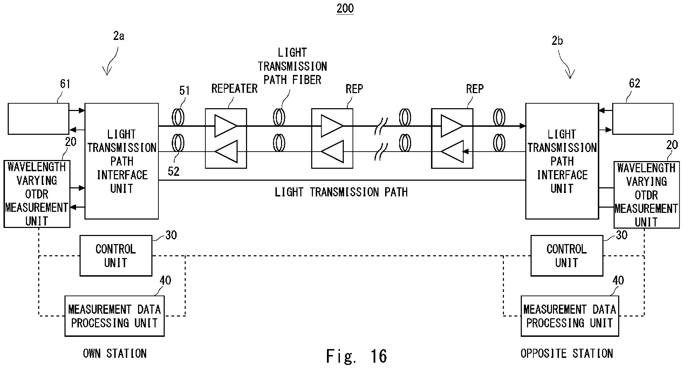

Next, a second example embodiment will be described. Fig. 16 is a configuration diagram illustrating a light-transmission-path system including a light-transmission-path-spectrum measurement device according to the second example embodiment. Since measurement light is performed loopback to a light transmission path 52 in a reception direction in an OTDR measurement in a light transmission path 51 and the light transmission path 52 in two ways, an acquired spectrum may be affected by a state of the light transmission path 52 in the reception direction. Therefore, as illustrated in Fig. 16, the light-transmission-path-spectrum measurement device 1 according to the first example embodiment may also be installed on an opposite station side of the light transmission paths 51 and 52, and a function of acquiring spectrum information measured at the opposite station and correcting spectrum information measured at an own station may be provided.

Specifically, a light-transmission-path system 200 according to the present example embodiment includes the light transmission path 51 relayed by a plurality of repeaters REP, the light transmission path 52 relayed by the plurality of repeaters REP, a light transmission/reception device 61 that transmits a wavelength multiplexed signal to the light transmission path 51, a light transmission/reception device 62 that transmits a wavelength multiplexed signal to the light transmission path 52, a light-transmission-path-spectrum measurement device 2a disposed on the light transmission/reception device 61 side, and a light-transmission-path-spectrum measurement device 2b disposed on the light transmission/reception device 62 side. The light transmission/reception device 61 transmits a wavelength multiplexed signal to the light transmission/reception device 62 via the light transmission path 51, and receives a wavelength multiplexed signal from the light transmission/reception device 62 via the light transmission path 52. Meanwhile, the light transmission/reception device 62 transmits a wavelength multiplexed signal to the light transmission/reception device 61 via the light transmission path 52, and receives a wavelength multiplexed signal from the light transmission/reception device 61 via the light transmission path 51.

The light-transmission-path-spectrum measurement device 2a is similar to the light-transmission-path-spectrum measurement device 1 described above. The light-transmission-path-spectrum measurement device 2b has a configuration similar to that of the light-transmission-path-spectrum measurement device 2a except for that the light-transmission-path-spectrum measurement device 2b outputs measurement light to the light transmission path 52 and has return light being returned via the light transmission path 51.

Then, when a measurement data processing unit 40 of the light-transmission-path-spectrum measurement device 2a processes measurement data about return light being measured by a wavelength varying OTDR measurement unit 20, the measurement data processing unit 40 of the light-transmission-path-spectrum measurement device 2a refers to measurement data being processed by a measurement data processing unit 40 of the light-transmission-path-spectrum measurement device 2b. In this way, an influence of a state of the light transmission path 52 can be reduced. Similarly, the measurement data processing unit 40 of the light-transmission-path-spectrum measurement device 2b refers to measurement data being processed by the measurement data processing unit 40 of the light-transmission-path-spectrum measurement device 2a.

The light-transmission-path-spectrum measurement devices 2a and 2b and the light-transmission-path system 200 according to the present example embodiment can reduce an influence of a light transmission path through which return light passes. A configuration and an effect other than that are included in the description of the first example embodiment.

### (Third Example Embodiment)

When a WDM signal on an opposite side is present in Fig. 16, at a time of an OTDR measurement at an own station, a function of communicating with a control unit 30 at an opposite station, controlling an optical signal multiplexing unit 11 in a light transmission path interface unit 10 at the opposite station, and blocking an OTDR measurement wavelength peripheral wavelength of the own station may be provided.

### (Fourth Example Embodiment)

When a wavelength multiplexed signal on a transmission side is not present in Fig. 2, a wavelength selection function of output dummy light may be provided in a dummy light generation unit 13. In this way, dummy light switching of a wavelength multiplexed signal may be achieved in the dummy light generation unit 13.

### (Fifth Example Embodiment)

In Fig. 2, an optical signal multiplexing unit 11 may have a function of measuring an OTDR by changing a measurement level of each of a wavelength multiplexed signal, dummy light, and an OTDR measurement. Specifically, the following function is achieved. In other words, a function of measuring a spectrum in a light transmission path 51 by making a transmission peak level of a wavelength multiplexed signal or dummy light flat may be provided. Further, for a purpose of reception OSNR equalization, reception signal quality equalization, and the like, a function of measuring a spectrum in a state where a transmission peak level of a wavelength multiplexed signal or dummy light has a pre-emphasis (intentional level deviation) may be provided. Furthermore, a function of performing suppression control of a wavelength multiplexed signal or dummy light for a purpose of increasing a speed of an OTDR measurement and securing a high dynamic range may be provided. Specifically, control is performed in such a way as to change a power distribution of a wavelength multiplexed signal and OTDR measurement light and raise an OTDR measurement light level in the light transmission path 51.

### (Sixth Example Embodiment)

In Fig. 2, an optical signal multiplexing unit 11 may have a function of intentionally changing a wavelength arrangement of a wavelength multiplexed signal and dummy light, and measuring an OTDR. Specifically, the following function is achieved. In other words, a wavelength band is previously blocked at a regular interval in a wavelength arrangement of a wavelength multiplexed signal or dummy light, and an OTDR measurement is performed at a blocked wavelength. In this way, shortening of control time, shortening of measurement time, and simplification of a control sequence can be achieved.

### (Seventh Example Embodiment)

In Fig. 2, an optical signal branching unit 12 may be provided with a wavelength selection function by a WSS and the like. Further, control according to filtering of output light of an OTDR measurement unit 20 other than measurement light and a change in OTDR measurement wavelength may be added.

Note that, the present invention is not limited to the example embodiments described above, and may be appropriately modified without departing from the scope of the present disclosure. For example, an example embodiment acquired by combining each of the configurations of the first to seventh example embodiments is also included within the scope of a technical idea. Further, the following light-transmission-path-spectrum measurement program for causing a computer to execute the light-transmission-path-spectrum measurement method in the present example embodiment is also included within the scope of a technical idea of the example embodiment.

A non-transitory computer-readable medium that stores a light-transmission-path-spectrum measurement program causing a computer to execute:
varying and generating a wavelength of measurement light to be transmitted to a first light transmission path;
selecting the wavelength of the generated measurement light, and outputting the selected wavelength to the first light transmission path;
controlling the wavelength of the generated measurement light and the wavelength of the measurement light to be selected;
measuring return light acquired from the measurement light being returned, by a repeater connected to the first light transmission path, via a second light transmission path connected to the repeater; and
processing measurement data about the measured return light.

Although the present invention has been described above as a configuration of hardware in the example embodiments described above, the present invention is not limited to the example embodiments. The present invention can also achieve any processing by causing a central processing unit (CPU) to execute a computer program.

Further, the program described above is stored by using a non-transitory computer-readable medium of various types, and can be supplied to a computer. The non-transitory computer-readable medium includes a tangible storage medium of various types. Examples of the non-transitory computer-readable medium include a magnetic recording medium (for example, a flexible disk, a magnetic tape, and a hard disk drive), a magneto-optical recording medium (for example, a magneto-optical disk), a CD-read only memory (CD-ROM), a CD-R, a CD-R/W, and a semiconductor memory (for example, a mask ROM, a programmable ROM (PROM), an erasable PROM (EPROM), a flash ROM, and a random access memory (RAM)). Further, a program may be supplied to a computer by a transitory computer-readable medium of various types. Examples of the transitory computer-readable medium include an electric signal, an optical signal, and an electromagnetic wave. The transitory computer-readable medium can supply a program to a computer via a wired communication path such as an electric wire and an optical fiber or a wireless communication path.

This application is based upon and claims the benefit of priority from Japanese patent application No. 2019-060548, filed on March 27, 2019.

### Reference Signs List

1, 2a, 2b Light-transmission-path-spectrum measurement device
10 Light transmission path interface unit
11 Optical signal multiplexing unit
12 Optical signal branching unit
13 Dummy light generation unit
14 Loopback circuit unit
20 Wavelength varying OTDR measurement unit
30 Control unit
40 Measurement data processing unit
51, 52 Light transmission path
54 Gain equalizer
100, 200 Light-transmission-path system
1020 COTDR measurement unit
1050 Light transmission path
1051, 1052 Light transmission path fiber
1053 Repeater
1060 Light transmission/reception device
1100 Light-transmission-path system
REP1, REP2, REP3, REP4, REP5 Repeater
REP6, REP7, REP8, REP9, REP10 Repeater

## Claims

1. A light-transmission-path-spectrum measurement device (1), compri sing:
wavelength varying OTDR measurement means (20) for varying and generating a wavelength of measurement light to be transmitted to a first light transmission path (51), and also measuring return light acquired from the measurement light being returned, by a plurality of repeaters (REP) connected to the first light transmission path (51), via a second light transmission path (52) connected to the repeaters (REP);
optical signal multiplexing means (11) for selecting the wavelength of the measurement light being generated by the wavelength varying OTDR measurement means (20), and outputting the selected wavelength to the first light transmission path (51);
control means (30) for controlling the wavelength of the measurement light being generated by the wavelength varying OTDR measurement means (20) and the wavelength of the measurement light being selected by the optical signal multiplexing means (11); and
measurement data processing means (40) for processing measurement data about the return light being measured by the wavelength varying OTDR measurement means (20),
wherein the control means (30) controls the wavelength varying OTDR measurement means (20) in such a way as to perform sweeping across a wavelength band of the first light transmission path (51) while switching the wavelength of the measurement light to be generated,
wherein the wavelength varying OTDR measurement means (20) acquires a cable trace across a wavelength band of the first light transmission path (51),
wherein the measurement data processing means (40) extracts peak level of cable trace in each wavelength of the measurement light for each position of the first light transmission path (51) and acquires the peak level in each position of the first light transmission path (51) over different wavelengths.

2. The light-transmission-path-spectrum measurement device (1) according to Claim 1, wherein the control means (30) controls the optical signal multiplexing means (11) in such a way as to block a portion near the wavelength of the measurement light in a wavelength multiplexed signal transmitted to the first light transmission path (51).

3. The light-transmission-path-spectrum measurement device (1) according to Claim 1 or 2, wherein the wavelength varying OTDR measurement means (20) sweeps, across a wavelength band, a spectrum of the return light in a predetermined position of each relay section.

4. The light-transmission-path-spectrum measurement device (1) according to Claim 1, wherein the measurement data processing means (40) generates three-dimensional data plots of the maximum peak level of the cable trace versus wavelength plotted for different repeaters (REP).

5. A light-transmission-path system (100), comprising:
the light-transmission-path-spectrum measurement device according to any one of Claims 1 to 4; and
a light transmission/reception device configured to transmit a wavelength multiplexed signal to the first light transmission path (51), and also receive the wavelength multiplexed signal from the second light transmission path (52).

6. A light-transmission-path-spectrum measurement method, comprising:
a step of varying and generating a wavelength of measurement light to be transmitted to a first light transmission path (51) relayed by a plurality of repeaters (REP);
a step of selecting the wavelength of the generated measurement light, and outputting the selected wavelength to the first light transmission path (51);
a step of controlling the wavelength of the measurement light to be generated and the wavelength of the measurement light to be selected;
a step of measuring return light acquired from the measurement light being returned, by a repeater connected to the first light transmission path (51), via a second light transmission path (52) connected to the repeaters (REP); and
a step of processing measurement data about the measured return light,
wherein in the step of controlling the wavelength of the measurement light to be generated and the wavelength of the measurement light to be selected, controlling the wavelength of the measurement light to perform sweeping across a wavelength band of the first light transmission path (51) while switching the wavelength of the measurement light to be generated,
wherein in the step of measuring return light acquired from the measurement light being returned, measuring a cable trace across a wavelength band of the first light transmission path (51),
wherein in the step of processing measurement data about the measured return light, extracting peak level of cable trace in each wavelength of the measurement light for each position of the first light transmission path (51) and acquiring the peak level in each position of the first light transmission path (51) over different wavelengths.

7. The light-transmission-path-spectrum measurement method according to Claim 6, further comprising, in the step of selecting the wavelength of the generated measurement light and outputting the selected wavelength to the first light transmission path (51), blocking a portion near the wavelength of the measurement light in a wavelength multiplexed signal transmitted to the first light transmission path (51).

8. A light-transmission-path-spectrum measurement program comprising instructions to cause the device of claim 1 to execute the steps of:
varying and generating a wavelength of measurement light to be transmitted to a first light transmission path (51) relayed by a plurality of repeaters (REP);
selecting the wavelength of the generated measurement light, and outputting the selected wavelength to the first light transmission path (51);
controlling the wavelength of the generated measurement light and the wavelength of the measurement light to be selected;
measuring return light acquired from the measurement light being returned, by a repeater connected to the first light transmission path (51), via a second light transmission path (52) connected to the repeaters (REP); and
processing measurement data about the measured return light,
wherein in the step of controlling the wavelength of the measurement light to be generated and the wavelength of the measurement light to be selected, controlling the wavelength of the measurement light to perform sweeping across a wavelength band of the first light transmission path (51) while switching the wavelength of the measurement light to be generated,
wherein in the step of measuring return light acquired from the measurement light being returned, measuring a cable trace across a wavelength band of the first light transmission path (51),
wherein in the step of processing measurement data about the measured return light, extracting peak level of cable trace in each wavelength of the measurement light for each position of the first light transmission path (51) and acquiring the peak level in each position of the first light transmission path (51) over different wavelengths.

## Patentansprüche

1. Vorrichtung (1) zur Messung des Lichttransmissionspfadspektrums, die aufweist:
eine wellenlängenverändernde OTDR-Messeinrichtung (20) zum Verändern und Erzeugen einer Wellenlänge von Messlicht, das zu einem ersten Lichttransmissionspfad (51) übertragen werden soll, und auch zum Messen von Rücklicht, das aus dem Messlicht erhalten wird, das durch mehrere mit dem ersten Lichttransmissionspfad (51) verbundene Verstärker (REP) über einen mit den Verstärkern (REP) verbundenen zweiten Lichttransmissionspfad (52) zurückgesendet wird;
eine optische Signalmultiplexeinrichtung (11) zum Auswählen der Wellenlänge des Messlichts, die durch die wellenlängenverändernde OTDR-Messeinrichtung (20) erzeugt wird, und zum Ausgeben der ausgewählten Wellenlänge an den ersten Lichttransmissionspfad (51);
eine Steuereinrichtung (30) zum Steuern der Wellenlänge des Messlichts, das von der wellenlängenverändernden OTDR-Messeinrichtung (20) erzeugt wird, und der Wellenlänge des Messlichts, die von der optischen Signalmultiplexeinrichtung (11) ausgewählt wird; und
eine Verarbeitungseinrichtung (40) für Messdaten zur Verarbeitung von Messdaten über das Rücklicht, die von der wellenlängenverändernden OTDR-Messeinrichtung (20) gemessen werden,
wobei die Steuereinrichtung (30) die wellenlängenverändernde OTDR-Messeinrichtung (20) in einer derartigen Weise steuert, dass sie über ein Wellenlängenband des ersten Lichttransmissionspfads (51) eine Abtastung durchführt, während die Wellenlänge des Messlichts, die erzeugt werden soll, gewechselt wird,
wobei die wellenlängenverändernde OTDR-Messeinrichtung (20) über ein Wellenlängenband des ersten Lichttransmissionspfads (51) eine Kabelabtastspur erhält,
wobei die Verarbeitungseinrichtung (40) für Messdaten Spitzenpegel der Kabelabtastspur in jeder Wellenlänge des Messlichts für jede Position des ersten Lichttransmissionspfads (51) extrahiert und den Spitzenpegel in jeder Position des ersten Lichttransmissionspfads (51) über verschiedene Wellenlängen erhält.

2. Vorrichtung (1) zur Messung des Lichttransmissionspfadspektrums nach Anspruch 1, wobei die Steuereinrichtung (30) die optische Signalmultiplexeinrichtung (11) in einer derartigen Weise steuert, dass ein Teil in der Nähe der Wellenlänge des Messlichts in einem wellenlängengemultiplexten Signal, das zu dem ersten Lichttransmissionspfad übertragen wird, gesperrt wird.

3. Vorrichtung (1) zur Messung des Lichttransmissionspfadspektrums nach Anspruch 1 oder 2, wobei die wellenlängenverändernde OTDR-Messeinrichtung (20) ein Spektrum des Rücklichts in einer vorbestimmten Position jedes Verstärkungsabschnitts über ein Wellenlängenband abtastet.

4. Vorrichtung (1) zur Messung des Lichttransmissionspfadspektrums nach Anspruch 1, wobei die Verarbeitungseinrichtung (40) für Messdaten dreidimensionale Datendiagramme des maximalen Spitzenpegels der Kabelabtastspur gegen Wellenlänge, aufgetragen für verschiedene Verstärker (REP), erzeugt.

5. Lichttransmissionspfadsystem (100), das aufweist:
die Vorrichtung zur Messung des Lichttransmissionspfadspektrums nach einem der Ansprüche 1 bis 4; und
eine Lichtübertragungs-/Empfangsvorrichtung, die konfiguriert ist, um ein wellenlängengemultiplextes Signal zu dem ersten Lichttransmissionspfad (51) zu übertragen und auch das wellenlängengemultiplexte Signal von dem zweiten Lichttransmissionspfad (52) zu empfangen.

6. Verfahren zur Messung des Lichttransmissionspfadspektrums, das aufweist:
einen Schritt zum Verändern und Erzeugen einer Wellenlänge von Messlicht, das zu einem ersten Lichttransmissionspfad (51) übertragen werden soll, das von mehreren Verstärkern (REP) weitergeleitet wird;
einen Schritt zum Auswählen der Wellenlänge des erzeugten Messlichts und Ausgeben der ausgewählten Wellenlänge an den ersten Lichttransmissionspfad (51);
einen Schritt zum Steuern der Wellenlänge des Messlichts, die erzeugt werden soll, und der Wellenlänge des Messlichts, die ausgewählt werden soll;
einen Schritt zum Messen von Rücklicht, das aus dem Messlicht erhalten wird, das durch einen mit dem ersten Lichttransmissionspfad (51) verbundenen Verstärker über einen mit den Verstärkern (REP) verbundenen zweiten Lichttransmissionspfad (52) zurückgesendet wird; und
einen Schritt zum Verarbeiten von Messdaten über das gemessene Rücklicht,
wobei in dem Schritt zum Steuern der Wellenlänge des Messlichts, die erzeugt werden soll, und der Wellenlänge des Messlichts, die ausgewählt werden soll, die Wellenlänge des Messlichts derart gesteuert wird, dass über ein Wellenlängenband des ersten Lichttransmissionspfads (51) eine Abtastung durchgeführt wird, während die Wellenlänge des Messlichts, die erzeugt werden soll, gewechselt wird,
wobei in dem Schritt zum Messen des Rücklichts, das aus dem Messlicht, das zurückgesendet wird, erhalten wird, eine Kabelabtastspur über ein Wellenlängenband des ersten Lichttransmissionspfads (51) gemessen wird,
wobei in dem Schritt zum Verarbeiten von Messdaten über das gemessene Rücklicht der Spitzenpegel der Kabelabtastspur in jeder Wellenlänge des Messlichts für jede Position des ersten Lichttransmissionspfads (51) extrahiert wird und der Spitzenpegel in jeder Position des ersten Lichttransmissionspfads (51) über verschiedene Wellenlängen erhalten wird.

7. Verfahren zur Messung des Lichttransmissionspfadspektrums nach Anspruch 6, das ferner in dem Schritt zum Auswählen der Wellenlänge des erzeugten Messlichts und Ausgeben der ausgewählten Wellenlänge an den ersten Lichttransmissionspfad (51) das Sperren eines Teils in der Nähe der Wellenlänge des Messlichts in einem wellenlängengemultiplexten Signal, das an den ersten Lichttransmissionspfads (51) übertragen wird, aufweist.

8. Programm zur Messung des Lichttransmissionspfadspektrums, das Anweisungen aufweist, um zu bewirken, dass die Vorrichtung nach Anspruch 1 die folgenden Schritte ausführt:
Verändern und Erzeugen einer Wellenlänge von Messlicht, das zu einem ersten Lichttransmissionspfad (51) übertragen werden soll, das von mehreren Verstärkern (REP) weitergeleitet wird;
Auswählen der Wellenlänge des erzeugten Messlichts und Ausgeben der ausgewählten Wellenlänge an den ersten Lichttransmissionspfad (51);
Steuern der Wellenlänge des erzeugten Messlichts und der Wellenlänge des Messlichts, die ausgewählt werden soll;
Messen von Rücklicht, das aus dem Messlicht erhalten wird, das durch einen mit dem ersten Lichttransmissionspfad (51) verbundenen Verstärker über einen mit den Verstärkern (REP) verbundenen zweiten Lichttransmissionspfad (52) zurückgesendet wird;
Verarbeiten von Messdaten über das gemessene Rücklicht,
wobei in dem Schritt zum Steuern der Wellenlänge des Messlichts, die erzeugt werden soll, und der Wellenlänge des Messlichts, die ausgewählt werden soll, die Wellenlänge des Messlichts derart gesteuert wird, dass über ein Wellenlängenband des ersten Lichttransmissionspfads (51) eine Abtastung durchgeführt wird, während die Wellenlänge des Messlichts, die erzeugt werden soll, gewechselt wird,
wobei in dem Schritt zum Messen des Rücklichts, das aus dem Messlicht, das zurückgesendet wird, erhalten wird, eine Kabelabtastspur über ein Wellenlängenband des ersten Lichttransmissionspfads (51) gemessen wird,
wobei in dem Schritt zum Verarbeiten von Messdaten über das gemessene Rücklicht der Spitzenpegel der Kabelabtastspur in jeder Wellenlänge des Messlichts für jede Position des ersten Lichttransmissionspfads (51) extrahiert wird und der Spitzenpegel in jeder Position des ersten Lichttransmissionspfads (51) über verschiedene Wellenlängen erhalten wird.

## Revendications

1. Dispositif (1) de mesure de spectre de trajet de transmission de lumière, comprenant :
un moyen (20) de mesure OTDR à longueur d'onde variable pour faire varier et générer une longueur d'onde de lumière de mesure à transmettre à un premier trajet (51) de transmission de lumière, et également mesurer une lumière de retour acquise à partir de la lumière de mesure renvoyée, par une pluralité de répéteurs (REP) connectés au premier trajet (51) de transmission de lumière, via un deuxième trajet (52) de transmission de lumière connecté aux répéteurs (REP) ;
un moyen (11) de multiplexage de signaux optiques pour sélectionner la longueur d'onde de la lumière de mesure générée par le moyen (20) de mesure OTDR à longueur d'onde variable, et délivrer la longueur d'onde sélectionnée au premier trajet (51) de transmission de lumière ;
un moyen (30) de commande pour commander la longueur d'onde de la lumière de mesure générée par le moyen (20) de mesure OTDR à longueur d'onde variable et la longueur d'onde de la lumière de mesure sélectionnée par le moyen (11) de multiplexage de signaux optiques ; et
un moyen (40) de traitement de données de mesure pour traiter des données de mesure concernant la lumière de retour mesurée par le moyen (20) de mesure OTDR à longueur d'onde variable,
dans lequel le moyen (30) de commande commande le moyen (20) de mesure OTDR à longueur d'onde variable de manière à réaliser un balayage sur une bande de longueur d'onde du premier trajet (51) de transmission de lumière tout en commutant la longueur d'onde de la lumière de mesure à générer,
dans lequel le moyen (20) de mesure OTDR à longueur d'onde variable acquiert une trace de câble sur une bande de longueur d'onde du premier trajet (51) de transmission de lumière,
dans lequel le moyen (40) de traitement de données de mesure extrait un niveau de crête de trace de câble dans chaque longueur d'onde de la lumière de mesure pour chaque position du premier trajet (51) de transmission de lumière et acquiert le niveau de crête dans chaque position du premier trajet (51) de transmission de lumière sur différentes longueurs d'onde.

2. Dispositif (1) de mesure de spectre de trajet de transmission de lumière selon la revendication 1, dans lequel le moyen (30) de commande commande le moyen (11) de multiplexage de signaux optiques de manière à bloquer une partie proche de la longueur d'onde de la lumière de mesure dans un signal multiplexé en longueur d'onde transmis au premier trajet (51) de transmission de lumière.

3. Dispositif (1) de mesure de spectre de trajet de transmission de lumière selon la revendication 1 ou 2, dans lequel le moyen (20) de mesure OTDR à longueur d'onde variable balaie, sur une bande de longueur d'onde, un spectre de la lumière de retour dans une position prédéterminée de chaque section de relais.

4. Dispositif (1) de mesure de spectre de trajet de transmission de lumière selon la revendication 1, dans lequel le moyen (40) de traitement de données de mesure génère des tracés de données tridimensionnelles du niveau de crête maximal de la trace de câble en fonction de la longueur d'onde tracés pour différents répéteurs (REP).

5. Système (100) de trajet de transmission de lumière, comprenant :
le dispositif de mesure de spectre de trajet de transmission de lumière selon l'une quelconque des revendications 1 à 4 ; et
un dispositif de transmission/réception de lumière configuré pour transmettre un signal multiplexé en longueur d'onde au premier trajet (51) de transmission de lumière, et également recevoir le signal multiplexé en longueur d'onde du deuxième trajet (52) de transmission de lumière.

6. Procédé de mesure de spectre de trajet de transmission de lumière, comprenant :
une étape de variation et de génération d'une longueur d'onde de lumière de mesure à transmettre à un premier trajet (51) de transmission de lumière relayé par une pluralité de répéteurs (REP) ;
une étape de sélection de la longueur d'onde de la lumière de mesure générée, et de fourniture de la longueur d'onde sélectionnée au premiertrajet (51) de transmission de lumière ;
une étape de commande de la longueur d'onde de la lumière de mesure à générer et de la longueur d'onde de la lumière de mesure à sélectionner;
une étape de mesure de la lumière de retour acquise à partir de la lumière de mesure renvoyée, par un répéteur connecté au premier trajet (51) de transmission de lumière, via un deuxième trajet (52) de transmission de lumière connecté aux répéteurs (REP) ; et
une étape de traitement des données de mesure concernant la lumière de retour mesurée,
dans lequel dans l'étape de commande de la longueur d'onde de la lumière de mesure à générer et de la longueur d'onde de la lumière de mesure à sélectionner, la commande de la longueur d'onde de la lumière de mesure pour réaliser un balayage sur une bande de longueur d'onde du premier trajet (51) de transmission de lumière tout en commutant la longueur d'onde de la lumière de mesure à générer,
dans lequel dans l'étape de mesure de la lumière de retour acquise à partir de la lumière de mesure renvoyée, la mesure d'une trace de câble sur une bande de longueur d'onde du premier trajet (51) de transmission de lumière,
dans lequel dans l'étape de traitement des données de mesure concernant la lumière de retour mesurée, l'extraction d'un niveau de crête de trace de câble dans chaque longueur d'onde de la lumière de mesure pour chaque position du premier trajet (51) de transmission de lumière et l'acquisition du niveau de crête dans chaque position du premier trajet (51) de transmission de lumière sur différentes longueurs d'onde.

7. Procédé de mesure de spectre de trajet de transmission de lumière selon la revendication 6, comprenant en outre, dans l'étape de sélection de la longueur d'onde de la lumière de mesure générée et de fourniture de la longueur d'onde sélectionnée au premier trajet (51) de transmission de lumière, le blocage d'une partie proche de la longueur d'onde de la lumière de mesure dans un signal multiplexé en longueur d'onde transmis au premier trajet (51) de transmission de lumière.

8. Programme de mesure de spectre de trajet de transmission de lumière comprenant des instructions pour amener le dispositif selon la revendication 1 à exécuter les étapes suivantes :
la variation et la génération d'une longueur d'onde de lumière de mesure à transmettre à un premier trajet (51) de transmission de lumière relayé par une pluralité de répéteurs (REP) ;
la sélection de la longueur d'onde de la lumière de mesure générée, et la fourniture de la longueur d'onde sélectionnée au premier trajet (51) de transmission de lumière ;
la commande de la longueur d'onde de la lumière de mesure générée et de la longueur d'onde de la lumière de mesure à sélectionner;
la mesure de la lumière de retour acquise à partir de la lumière de mesure renvoyée, par un répéteur connecté au premier trajet (51) de transmission de lumière, via un deuxième trajet (52) de transmission de lumière connecté aux répéteurs (REP) ; et
le traitement des données de mesure concernant la lumière de retour mesurée,
dans lequel dans l'étape de commande de la longueur d'onde de la lumière de mesure à générer et de la longueur d'onde de la lumière de mesure à sélectionner, la commande de la longueur d'onde de la lumière de mesure pour réaliser un balayage sur une bande de longueur d'onde du premier trajet (51) de transmission de lumière tout en commutant la longueur d'onde de la lumière de mesure à générer,
dans lequel dans l'étape de mesure de la lumière de retour acquise à partir de la lumière de mesure renvoyée, la mesure d'une trace de câble sur une bande de longueur d'onde du premier trajet (51) de transmission de lumière,
dans lequel dans l'étape de traitement des données de mesure concernant la lumière de retour mesurée, l'extraction d'un niveau de crête de trace de câble dans chaque longueur d'onde de la lumière de mesure pour chaque position du premier trajet (51) de transmission de lumière et l'acquisition du niveau de crête dans chaque position du premier trajet (51) de transmission de lumière sur différentes longueurs d'onde.
